# DEMANDE DE BREVET EUROPEEN

(11) **EP 1 220 416 A2**
(43) Date de publication de la demande: **03.07.2002**
(21) Numéro de dépôt: 01403120.7
(22) Date de dépôt: 05.12.2001
(51) Int. Cl.: H02J 7/14

(54) **Dispositif de production d'électricité à partir du réseau triphasé, comprenant un alternateur embarqué**

(30) Priorité: 19.12.2000 FR 0016574
(71) Demandeur: MOTEURS LEROY-SOMER, 16000 Angouleme (FR)
(72) Inventeur: Giraud, Régis, 16000 Angouleme (FR); Andrieux, Christian, 16000 Angouleme (FR); Cester, Christophe, 16000 Angouleme (FR)
(74) Mandataire: Tanty, François

(57) **Abrégé**

Dispositif de production d'électricité comportant un alternateur triphasé (10), un redresseur (6) pour générer à partir du courant délivré par l'alternateur un courant redressé, et un hacheur survolteur (15) comportant au moins un élément de commutation (15) permettant de générer une surtension aux bornes de l'alternateur grâce à l'inductance propre de l'alternateur.

Le dispositif comporte en outre un commutateur (35a, 35b, 35c) permettant de relier sélectivement les trois enroulements (10a, 10b, 10c) soit en étoile lorsque l'alternateur est entraîné en rotation pour produire de l'électricité, soit aux phases respectives d'un réseau triphasé lorsque l'alternateur est à l'arrêt.

## Description

La présente invention concerne la production d'électricité à bord de véhicules ou de containers, par exemple.

Il est connu de produire de l'électricité à bord de véhicules ou de containers au moyen de dispositifs comprenant un alternateur entraîné par un moteur thermique, un redresseur et un hacheur survolteur.

Un grand nombre de tels dispositifs de production d'électricité embarqués ont été proposés, avec notamment pour objectif de diminuer le poids de l'équipement.

On a ainsi proposé de nombreux dispositifs dans lesquels le hacheur survolteur utilise l'inductance propre de l'alternateur, ce qui permet d'éviter l'utilisation d'un bobinage propre au hacheur.

On connaît notamment par la demande GB-A- 2 289 581 un dispositif comportant un alternateur triphasé conventionnel, un redresseur et un hacheur demi-pont en aval du redresseur.

Les brevets US-A- 5 793 625 et US-A- 4 825 139 décrivent d'autres dispositifs dont le hacheur utilise l'inductance propre de l'alternateur.

Les installations alimentées en courant au moyen du dispositif de production d'électricité présent à bord du véhicule ou du container sont par exemple des installations frigorifiques.

Lorsque le moteur thermique est à l'arrêt, ces installations doivent pouvoir continuer à fonctionner.

L'invention vise à répondre à ce besoin.

La présente invention a ainsi pour objet un nouveau dispositif de production d'électricité, comportant
- un alternateur triphasé, c'est-à-dire un générateur n'ayant aucune fonction motrice, comprenant trois enroulements, cet alternateur ayant une inductance propre,
- un redresseur pour générer à partir du courant délivré par l'alternateur un courant redressé,
- un hacheur survolteur, notamment un hacheur comportant au moins un élément de commutation, permettant de générer une surtension aux bornes de l'alternateur grâce à l'inductance propre de l'alternateur,
- un commutateur permettant de relier sélectivement les trois enroulements de l'alternateur soit en étoile lorsque l'alternateur est entraîné en rotation pour produire de l'électricité, soit aux phases respectives d'un réseau triphasé lorsque l'alternateur est à l'arrêt.

La société demanderesse a constaté que les enroulements de l'alternateur pouvaient être reliés directement au réseau afin d'alimenter le redresseur.

Ainsi, il n'est pas nécessaire de prévoir un redresseur autre que celui prévu pour l'alternateur, ce qui permet de gagner en poids, coût, fiabilité et simplicité.

De plus, il est possible grâce à la présence du hacheur en aval de l'alternateur de délivrer une puissance variable au(x) circuit(s) utilisateur(s), et ainsi de les faire fonctionner au régime le plus adapté aux circonstances.

En particulier, le dispositif peut alimenter un régulateur permettant de faire varier à la fois la fréquence f et la tension U en gardant par exemple U/f constant.

Cela permet par exemple de faire fonctionner quelque soit la fréquence et la tension du réseau d'alimentation un moteur à couple constant avec une puissance variable, sans augmentation de masse ou de volume.

Un moteur de puissance 5,5 kW à 400 V et à 50 Hz peut voir par exemple sa puissance passer à 6,6 kW à 460 V et 60 Hz et à 7,5 kW à 500 V et 70 Hz.

En outre, le fait de relier les circuits utilisateurs par l'intermédiaire notamment du redresseur et des enroulements de l'alternateur permet d'améliorer le facteur de puissance.

De préférence, on utilise un alternateur ayant huit pôles et l'élément de commutation opère avec une fréquence de commutation comprise entre 3 et 15 kHz, de préférence inférieure à 8 kHz et de préférence encore égale à 7,5 kHz environ.

La société demanderesse a constaté que l'on pouvait faire fonctionner le dispositif selon l'invention à une telle fréquence de commutation avec un rendement global satisfaisant.

De préférence, l'inductance en % propre par phase de l'alternateur, définie par la formule LωI_{N}/Vₒ, où L est l'inductance propre de l'alternateur, ω la pulsation, I_{N} le courant nominal à une vitesse donnée, par exemple 1 500 trs/mn, et Vₒ la tension à vide de l'alternateur à ladite vitesse, est comprise entre 15 et 40 %, de préférence entre 20 et 30 %.

Dans une réalisation préférée correspondant à une puissance de l'ordre de 10 kW, la tension étant de 294 volts entre phases à 3 000 trs/mn, l'inductance par phase de l'alternateur est inférieure ou égale à 2 mH, de préférence inférieure ou égale à 1,5 mH, ce qui correspond à une inductance en % inférieure à 30 %.

Toujours dans une réalisation correspondant à une puissance de l'ordre de 10 kW, la tension étant de 294 volts entre phases à 3 000 trs/mn, l'inductance par phase de l'alternateur est supérieure ou égale à 1 mH, ce qui correspond à une inductance en % supérieure à 20 %.

La société demanderesse a constaté que ces valeurs d'inductance et de fréquence permettaient, dans le cas d'un alternateur huit pôles, de maintenir les pertes dues aux harmoniques de courant à un niveau particulièrement faible.

De préférence, l'alternateur est à aimants permanents.

De préférence également, le hacheur est en aval du redresseur, ce qui permet de n'utiliser qu'un seul transistor, par exemple un transistor IGBT.

Ce transistor unique peut être refroidi aisément par circulation d'un liquide, alors que dans les dispositifs connus dont les hacheurs comportent plusieurs transistors, ce refroidissement est rendu plus difficile de par le nombre de transistors, lesquels ne peuvent être montés sur un refroidisseur commun sans poser des problèmes d'isolation.

De préférence, la fréquence de commutation est constante, ce qui simplifie l'électronique de commande.

Le hacheur peut être relié directement au redresseur, sans bobine entre les deux.

Dans une réalisation préférée, le hacheur alimente au moins un onduleur commandé par un circuit de commande recevant une information représentative de la vitesse de rotation du rotor de l'alternateur.

Ainsi le circuit de commande peut tenir compte de la puissance disponible pour les appareils reliés à l'onduleur, et commander le fonctionnement de ces derniers en conséquence.

Le dispositif permet par exemple d'alimenter en électricité un système de réfrigération comportant au moins un moteur.

L'invention sera mieux comprise à la lecture de la description détaillée qui va suivre, d'un exemple de réalisation non limitatif de l'invention, et à l'examen du dessin annexé, sur lequel :
- la figure 1 est un schéma en blocs d'une chaîne énergétique embarquée sur un véhicule automobile et comportant un dispositif de production d'électricité conforme à l'invention,
- la figure 2 est un schéma électrique simplifié du dispositif de production d'électricité selon l'invention,
- la figure 3 représente isolément en perspective l'alternateur, et
- la figure 4 est une vue de côté avec demi-coupe axiale de l'alternateur de la figure 3.

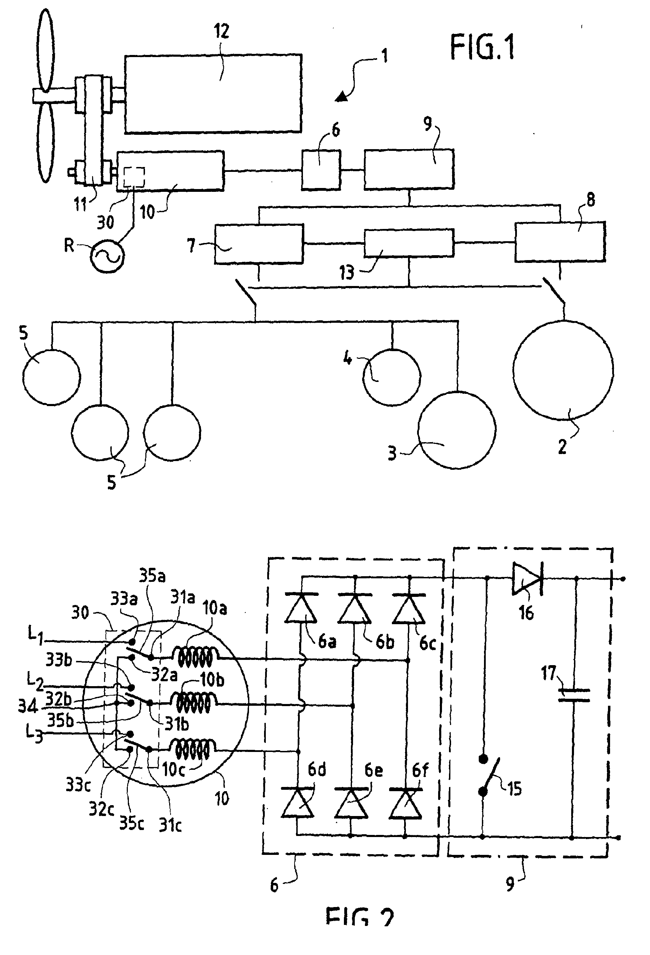

La chaîne énergétique 1 représentée sur la figure 1 comporte différents appareils 2 à 5 entraînés par des moteurs électriques, tels des moto-ventilateurs ou des pompes.

Deux modes de fonctionnement sont possibles, à savoir un mode de fonctionnement autonome dans lequel l'énergie est fournie par un moteur thermique 12, par exemple un moteur diesel dont la vitesse de rotation est susceptible de varier, typiquement entre 600 et 3 600 trs/mn, et un mode de fonctionnement non autonome, dans lequel le moteur thermique 12 est à l'arrêt et l'énergie est fournie par un réseau électrique triphasé R, par exemple 400 V/50 Hz ou 460 V/60Hz, ou autre.

Les appareils 2 à 5 sont alimentés en courant triphasé de fréquence constante ou variable par deux onduleurs 7 et 8 eux-mêmes alimentés en courant continu par un hacheur survolteur 9 relié à un redresseur 6, lui-même relié à un alternateur 10 dont le rotor peut être entraîné en rotation, par l'intermédiaire d'une transmission 11, par le moteur thermique 12.

La transmission 11 permet de multiplier par exemple d'un facteur 2 ou 3 la vitesse de rotation du rotor, de sorte que l'alternateur 10 peut être entraîné à une vitesse de rotation comprise par exemple entre 1 500 trs/mn lorsque le moteur tourne au ralenti et à plus de 5 000 trs/mn lorsque le moteur 12 tourne à un régime élevé.

La chaîne 1 comporte un circuit de commande 13 recevant notamment une information représentative de la vitesse de rotation du rotor de l'alternateur 10, afin de commander les différents appareils utilisateurs 2 à 5 en fonction de la puissance disponible au niveau des onduleurs 7 et 8.

L'alternateur 10 est triphasé et comporte trois bobinages 10a, 10b et 10c, chacun d'inductance propre L.

Les trois bobinages 10a, 10b et 10c sont reliés chacun à une borne 31a, 31b et 31c d'un commutateur 30 ayant des interrupteurs 35a, 35b et 35c commandés simultanément et associés chacun à un bobinage 10a, 10b et 10c.

Les bornes 31a, 31b et 31c peuvent être reliées sélectivement par les interrupteurs 35a, 35b et 35c soit à des bornes 32a, 32b et 32c respectives, soit à des bornes 33a, 33b et 33c respectives, en fonction du mode de fonctionnement sélectionné.

Les bornes 32a, 32b et 32c sont reliées à un point milieu 34 tandis que les bornes 33a, 33b et 33c sont reliées respectivement aux trois phases L₁, L₂ et L₃ du réseau triphasé R.

Le commutateur 30 peut être à interrupteurs 35a, 35b et 35c mécaniques ou électroniques et être actionné manuellement ou automatiquement et permet de passer au choix du mode autonome de fonctionnement au mode non autonome, et vice-versa.

De préférence, la commutation est verrouillable dans chacune de ses positions, le passage d'une position à l'autre nécessitant une clé, par exemple.

Lorsqu'un commutateur électronique est utilisé, on veillera de préférence à ce que la commutation soit synchronisée avec des grandeurs électriques du réseau et/ou de l'alternateur, de manière à perturber le moins possible le fonctionnement des circuits utilisateurs.

En mode de fonctionnement autonome, les bobinages 10a, 10b et 10c sont reliés en étoile par le point milieu 34 et en mode de fonctionnement non autonome, le redresseur 6 est alimenté au travers des bobinages 10a, 10b et 10c par le réseau R, sans ajout de pont redresseur externe.

La puissance fournie peut-être constante, étant régulée par le hacheur 9.

Le redresseur 6 comporte, de façon connue en soi, six diodes 6a à 6f agencées pour délivrer une tension redressée.

Le hacheur survolteur 9 comporte un interrupteur électronique 15 apte à court-circuiter la sortie du redresseur 6, une diode 16 en aval de l'interrupteur 15 et un condensateur de stockage 17 en sortie.

Le hacheur 9 est du type hacheur parallèle et utilise l'inductance propre de l'alternateur 10 pour stocker l'énergie réactive.

Dans l'exemple de réalisation décrit, l'interrupteur électronique 15 est constitué par un seul transistor IGBT, commandé par un circuit électronique de commande en commutation à une fréquence de commutation constante, ce circuit électronique de commande étant réalisé de manière conventionnelle et n'étant pas représenté dans un souci de clarté du dessin.

Le circuit électronique de commande est avantageusement agencé de manière à modifier le rapport cyclique du signal de commande de l'interrupteur électronique 15 en fonction de la tension en sortie du hacheur élévateur 9, de manière à réguler cette tension à une valeur de consigne.

Dans l'exemple particulier de réalisation décrit, la fréquence de commutation est de 7,5 kHz.

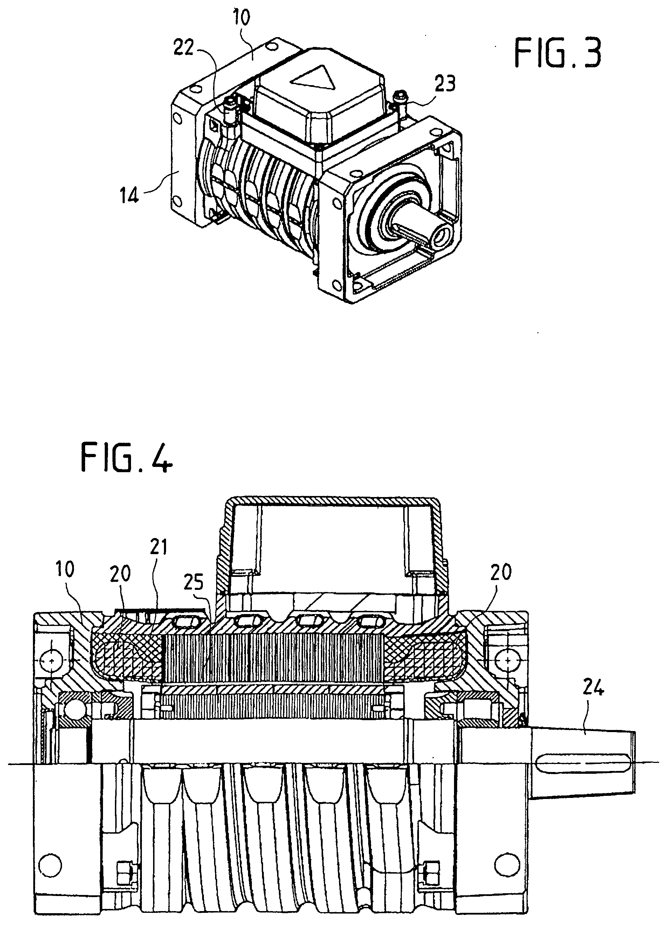

On a représenté isolément sur les figures 3 et 4 l'alternateur 10.

L'alternateur 10 comporte un carter 11 prévu pour être refroidi par un liquide, pourvu à cet effet d'embouts de raccordement 12 et 13 à un circuit d'eau de refroidissement.

L'alternateur 10 est dans l'exemple de réalisation décrit un alternateur triphasé comportant huit pôles, les trois bobinages 10a, 10b et 10c étant bobinés chacun de manière conventionnelle dans des encoches du stator 25 de l'alternateur 10, ce dernier comportant au total quarante-huit encoches.

Le rotor 24 comporte dans l'exemple de réalisation décrit des aimants permanents, au nombre de quatre par pôle.

De préférence, on utilise des aimants à champ rémanent assez faible mais avec une bonne coercitivité (Bᵣ voisin de 1,1T nominal à 20 °C et H_{cj} voisin de 900 kA/m nominal à 150 °C).

L'épaisseur des aimants utilisés est voisine de 5 mm, par exemple.

De préférence, les tôles du stator sont en alliage de silicium, la longueur des fers étant de l'ordre de 115 mm.

Toujours dans l'exemple de réalisation décrit, le nombre de spires est égal à 20.

Par ailleurs, comme on peut le voir sur la figure 4, les têtes de chignon 20 formées par les fils des bobinages à l'extérieur des fers du stator faisant saillie de part et d'autre de ces derniers sont noyées dans une résine conductrice 21, ce qui permet notamment d'en réduire les pertes.

Dans l'exemple de réalisation décrit, la puissance du dispositif est de l'ordre de 10 kW et l'inductance propre L par phase de l'alternateur est de l'ordre de 1,3 mH.

La fréquence de commutation de l'interrupteur électronique 15 et la valeur de l'inductance propre de chaque phase de l'alternateur permettent d'avoir à la fois des pertes par commutation dans l'interrupteur électronique 15 et un niveau d'harmoniques compatibles avec les performances recherchées.

La valeur de l'inductance propre par phase qui est choisie permet d'une part de maintenir les harmoniques à un niveau relativement bas compte tenu de la fréquence de commutation de l'interrupteur électronique et d'autre part d'éviter que la chute de tension due au phénomène d'empiétement s'avère préjudiciable pour la puissance de sortie du hacheur élévateur.

L'inductance en % est choisie entre 20 et 40 %, étant de préférence comprise entre 20 et 30 %.

Bien entendu, l'invention n'est pas limitée à l'exemple de réalisation qui vient d'être décrit.

On peut notamment utiliser comme interrupteur électronique 15 un ou plusieurs composants appropriés capables d'assurer la fonction de mise en court-circuit de la sortie du redresseur ; il est toutefois avantageux d'utiliser un composant unique car ce dernier peut être aisément refroidi par circulation de liquide, alors que dans le cas de composants multiples, le refroidissement par liquide pose des problèmes d'isolation électrique de ces différents composants.

L'enrobage des têtes de chignon du stator de l'alternateur dans une résine conductrice n'est pas indispensable mais présente l'avantage de faciliter le refroidissement des bobinages et d'augmenter la puissance massique de l'alternateur.

De même, l'utilisation d'aimants permanents pour exciter le stator de l'alternateur est une solution préférentielle, mais on ne sort pas du cadre de la présente invention en utilisant une excitation séparée.

On peut placer plusieurs alternateurs 10 côte à côte, entraînés par un axe commun, en vue d'augmenter la puissance délivrée.

Finalement, grâce à l'invention, un unique redresseur peut être utilisé, que l'alternateur soit entraîné en rotation ou que le moteur soit à l'arrêt.

L'alimentation de l'alternateur en courant alternatif permet de caler l'alternateur en position et de limiter les pertes et les efforts.

Aucune self externe n'est nécessaire.

Le poids des équipements embarqués peut rester relativement faible.

## Revendications

1. Dispositif de production d'électricité comportant :
- un alternateur triphasé (10) n'ayant aucune fonction motrice, comprenant trois enroulements (L₁, L₂, L₃), cet alternateur ayant une inductance propre,
- un redresseur (6) pour générer à partir du courant délivré par l'alternateur un courant redressé, et
- un hacheur survolteur (9) comportant au moins un élément de commutation (15) permettant de générer une surtension aux bornes de l'alternateur grâce à l'inductance propre de l'alternateur,
- un commutateur (35a, 35b, 35c) permettant de relier sélectivement les trois enroulements soit en étoile lorsque l'alternateur est entraîné en rotation pour produire de l'électricité, soit aux phases respectives d'un réseau triphasé lorsque l'alternateur est à l'arrêt.

2. Dispositif selon la revendication 1, dans lequel l'alternateur comporte 8 pôles et dans lequel ledit élément de commutation (15) opère avec une fréquence de commutation comprise entre 3 et 15 kHz.

3. Dispositif selon la revendication 2, dans lequel ladite fréquence de commutation est inférieure à 8 kHz.

4. Dispositif selon la revendication 3, dans lequel ladite fréquence de commutation est de 7,5 kHz environ.

5. Dispositif selon l'une quelconque des revendications 1 à 3, dans lequel LωI_{N}/Vₒ est compris entre 0,15 et 0,4, où L est l'inductance propre par phase de l'alternateur, ω la pulsation, I_{N} le courant nominal à une vitesse donnée, Vₒ la tension à vide de l'alternateur à cette vitesse.

6. Dispositif selon l'une quelconque des revendications 1 à 5, dans lequel LωI_{N}/Vₒ est compris entre 0,2 et 0,3, où L est l'inductance propre par phase de l'alternateur, ω la pulsation, I_{N} le courant nominal à une vitesse donnée, Vₒ la tension à vide de l'alternateur à cette vitesse.

7. Dispositif selon l'une quelconque des revendications 1 à 6, dans lequel le redresseur comporte trois bornes d'entrées reliées aux enroulements (10a, 10b, 10c) de l'alternateur et deux bornes de sortie reliées à l'élément de commutation (15).

8. Dispositif selon l'une quelconque des revendications précédentes, dans lequel l'élément de commutation est constitué par un seul transistor IGBT.

9. Dispositif selon la revendication 1, relié à un système de réfrigération comportant au moins un moteur.

10. Dispositif selon la revendication 9, comportant un régulateur permettant de faire varier à la fois la fréquence f et la tension U dudit moteur en gardant U/f constant.
